# EUROPÄISCHE PATENTSCHRIFT

(11) **EP 3 157 725 B1**
(45) Veröffentlichungstag und Bekanntmachung des Hinweises auf die Patenterteilung: **08.04.2020**
(21) Anmeldenummer: 15716839.4
(22) Anmeldetag: 21.04.2015
(51) Int. Cl.: B29C 45/14, B60R 11/04

(54) **OPTIKTRÄGER, VERFAHREN ZUR HERSTELLUNG EINES OPTIKTRÄGERS, VORRICHTUNG ZUR HERSTELLUNG EINES OPTIKTRÄGERS UND KAMERASYSTEM**
OPTICAL CARRIER, METHOD FOR PRODUCING AN OPTICAL CARRIER, DEVICE FOR PRODUCING AN OPTICAL CARRIER, AND CAMERA SYSTEM
SUPPORT D'OPTIQUE, PROCÉDÉ DE FABRICATION D'UN SUPPORT D'OPTIQUE, DISPOSITIF DE FABRICATION D'UN SUPPORT D'OPTIQUE ET SYSTÈME DE CAMÉRA

(30) Priorität: 18.06.2014 DE 102014211720
(43) Veröffentlichungstag der Anmeldung: 26.04.2017
(73) Patentinhaber: Robert Bosch GmbH, 70442 Stuttgart (DE)
(72) Erfinder: GEISE, Stephan, 59602 Ruethen (DE); APELT, Stefan, 71554 Weissach Im Tal (DE)
(86) Internationale Anmeldenummer: PCT/EP2015/058579
(87) Internationale Veröffentlichungsnummer: WO 2015/192998

(56) Entgegenhaltungen:
- EP-A1- 1 717 011
- DE-A1- 10 215 100
- DE-A1-102011 005 629

## Beschreibung

Die Erfindung betrifft einen Optikträger für ein Kamerasystem eines Umfelderfassungssystems eines Kraftfahrzeuges, ein Verfahren zur Herstellung eines Optikträgers, eine Vorrichtung zur Herstellung eines Optikträgers und ein Kamerasystem für ein Umfelderfassungssystem eines Kraftfahrzeuges.

### Stand der Technik

Kamerasysteme für Umfelderfassungssysteme von Fahrzeugen gelten als bekannt. Die optischen Systeme erfassen das Fahrzeugumfeld und liefern Informationen für weitere Fahrzeugsysteme. Neben der Erfassung von Front- oder Heckbereich des Fahrzeuges gibt es beispielsweise Sonderformen, welche Informationen bei Nachtfahrten liefern oder die Fahrspur des Fahrers überwachen.

Die Kamerasysteme bestehen dabei aus einem Optikträger mit einer Optik aus mehreren Linsen sowie einem Bildaufnehmer. Der Optikträger wird serienmäßig aus speziell verstärkten polymeren Kunststoffen hergestellt, die durch hohe Toleranzanforderungen bezüglich Dimensions- und Lagegenauigkeiten einen entsprechend hohen Einkaufspreis haben. Gleichzeitig sind diese Materialien schwer zu verarbeiten. Bei der Montage des Kamerasystems ist darauf zu achten, dass der Optikträger einschließlich der Optik zum Bildaufnehmer ausgerichtet sind, da nur dann gewährleistet ist, dass der Bildaufnehmer das richtige Bild erfasst.

Die DE 10 2004 009 920 A1 offenbart ein Kamerasystem, insbesondere für ein Umfelderfassungssystem eines Kraftfahrzeuges mit einem Halterahmen zur Halterung eines Optikträgers, dessen Optik zur Führung von einfallendem Licht auf einen Bildaufnehmer dient. Der Halterahmen weist eine weitgehend zur Ebene des Bildaufnehmers parallel angeordnete Auflagefläche für den Optikträger auf und der Optikträger ist in einer Justierposition in der Ebene der Auflagefläche verschiebbar und in einer Solllageposition dauerhaft fixierbar.

Die DE 10 2011 005 629 A1 offenbart ein Bildsensor-Modul umfassend einen Bildsensorträger und einen Bildsensor, wobei der Bildsensorträger als spritzgegossener Schaltungsträger ausgebildet ist und wobei der Bildsensor auf dem Bildsensorträger angeordnet ist und wobei der Bildsensorträger zumindest ein Haltemittel umfasst, welche an dem Bildsensorträger angeformt ist. Ferner ist ein Herstellungsverfahren für ein Bildsensor-Modul sowie eine Verwendung gezeigt.

In der DE 102 15 100 A1 ist eine Leiterbahn tragende Folie zur Herstellung eines Verbundkörpers durch Hinterspritzen der Folie in einem Spritzgießwerkzeug offenbart, wobei die Folie ferromagnetische Versteifungselemente, welche eine positionsgenaue Fixierung der Folie im Spritzgießwerkzeug mittels elektromagnetischer Kräfte ermöglichen.

Die EP 1 717 011 A1 offenbart eine zweiseitige Modellform zur Verzierung von Kunststoffteilen.

### Offenbarung der Erfindung

Die vorliegende Erfindung schafft einen Optikträger für ein Kamerasystem eines Umfelderfassungssystems eines Kraftfahrzeuges mit einer polymeren Schaltungsfolie, wobei auf einer ersten Seite der polymeren Schaltungsfolie Bahnen als Leiter oder Widerstände aufgebracht sind und auf einer zweiten, der ersten Seite gegenüberliegenden Seite der polymeren Schaltungsfolie ein duroplastischer Kunststoff aufgespritzt ist.

Die vorliegende Erfindung schafft des Weiteren ein Verfahren zur Herstellung eines Optikträgers. Das Verfahren umfasst ein Anordnen einer polymeren Schaltungsfolie in einem Spritzgießwerkzeug einer Spritzgießmaschine, wobei auf einer ersten Seite der polymeren Schaltungsfolie Bahnen als Leiter oder Widerstände aufgebracht sind. Das Verfahren umfasst des Weiteren ein Fixieren der polymeren Schaltungsfolie im Spritzgießwerkzeug und ein Einspritzen eines duroplastischen Kunststoffes in eine Kavität des Spritzgießwerkzeuges zum Aufspritzen des duroplastischen Kunststoffes auf eine zweite, der ersten Seite gegenüberliegenden Seite der polymeren Schaltungsfolie.

Die vorliegende Erfindung schafft überdies eine Vorrichtung zur Herstellung des erfindungsgemäßen Optikträgers. Die Vorrichtung weist eine Spritzgießmaschine mit einem Spritzgießwerkzeug und eine Rolle-zu-Rolle Anlage auf, welche dazu ausgebildet ist, die polymere Schaltungsfolie durch das Spritzgießwerkzeug zu führen.

Die vorliegende Erfindung schafft darüber hinaus ein Kamerasystem für ein Umfelderfassungssystem eines Kraftfahrzeuges. Das Kamerasystem weist den erfindungsgemäßen Optikträger, einen im Bereich einer Öffnung der polymeren Schaltungsfolie vorgesehenen Bildaufnehmer und eine in dem Optikträger angeordnete Optik auf, welche einfallendes Licht auf den Bildaufnehmer führt.

Eine Idee der vorliegenden Erfindung ist es, einen Optikträger für ein Kamerasystem eines Umfelderfassungssystems durch Hinterspritzen von folienbasierten Schaltungen mit einem Kunststoff herzustellen. Die polymere Schaltungsfolie, auf welche der duroplastische Kunststoff aufgespritzt wird, weist eine hohe Wärmebeständigkeit auf. Die hohe Wärmebeständigkeit der polymeren Schaltungsfolie weist den Vorteil auf, dass Duroplast-Kunststoffe mit besonders vorteilhaften Materialeigenschaften verwendet werden können. Da der duroplastische Werkstoff im Spritzgießwerkzeug eine geringe Viskosität besitzt, genügt somit ein geringer Einspritzdruck, um den Optikträger auszuformen.

Vorteilhafte Ausführungsformen und Weiterbildungen ergeben sich aus den Unteransprüchen sowie aus der Beschreibung unter Bezugnahme auf die Figuren.

Vorzugsweise ist vorgesehen, dass die polymere Schaltungsfolie durch eine Polyimidfolie ausgebildet ist, welche bis zu einer Temperatur von 200°C wärmebeständig ist. Durch Verwendung eines Duroplast-Kunststoffes in Verbindung mit der hochtemperaturbeständigen polymeren Schaltungsfolie genügt aufgrund der geringen Viskosität des duroplastischen Werkstoffes ein geringer Einspritzdruck, um das Bauteil auszuformen. Somit wird die Folie nur sehr gering belastet, so dass die vorhandenen Schaltungen nicht beschädigt werden.

Vorzugsweise ist ferner vorgesehen, dass der duroplastische Kunststoff durch ein Epoxidharz, eine Phenolformverbindung oder ein Bulk Moulding Compound ausgebildet ist. Das Bulk Moulding Compound weist im Vergleich zu einem polymeren Material einen geringeren Kilogrammpreis auf. Da der duroplastische Werkstoff im Spritzgießwerkzeug eine geringe Viskosität besitzt, genügt ein geringer Einspritzdruck, um den Optikträger auszuformen. Somit wird die polymere Schaltungsfolie nur sehr gering belastet, so dass die vorhandenen Schaltungen nicht beschädigt werden. Durch eine positive Schwindung des Bulk Moulding Compound im Spritzgießwerkzeug wird die polymere Schaltungsfolie an eine Werkzeugwandung gedrückt und somit sehr genaue Form- und Lagetoleranzbereiche für die optische Ausrichtung reproduzierbar abgeformt. Nach dem Aushärten der duroplastischen Masse ist der Optikträger auch bei hoher Temperatur oder Luftfeuchtigkeit sehr dimensions- und formstabil und kann eine optische Funktion dauerhaft gewährleisten. Ein weiterer Vorteil der hohen Dimensionsstabilität des Materials ist die Möglichkeit, dass die Optik direkt in den Optikträger eingepresst werden kann und somit ein zusätzliches Bauteil und Fertigungsschritt entfallen.

Gemäß einem weiteren bevorzugten Ausführungsbeispiel ist vorgesehen, dass die zweite Seite der polymeren Schaltungsfolie mit Plasma behandelt, mit einer Laserstruktur versehen oder ein Haftgrund auf die zweite Seite der polymeren Schaltungsfolie aufgetragen ist. Somit kann eine bessere Haftung zwischen einer Duroplastmasse und der Thermoplastfolie erreicht werden.

Gemäß einer weiteren bevorzugten Ausgestaltung ist vorgesehen, dass auf der zweiten Seite der polymeren Schaltungsfolie ein Haftvermittler zur Verbesserung der Haftfestigkeit zwischen der polymeren Schaltungsfolie und dem Kunststoff, welcher auf die polymere Schaltungsfolie aufgespritzt ist, aufgetragen ist. Damit kann die Haftfestigkeit auf ein erforderliches Maß verbessert werden, falls die gewählte Materialpaarung zwischen polymerer Schaltungsfolie und Duroplast-Kunststoff keine ausreichende Festigkeit besitzt.

Gemäß einem weiteren bevorzugten Ausführungsbeispiel ist vorgesehen, dass die polymere Schaltungsfolie von Rolle-zu-Rolle durch das Spritzgießwerkzeug geführt und mittels einer im Spritzgießwerkzeug integrierten Stanzvorrichtung zugeschnitten wird. Durch die gezielte Funktionsintegration bei der Herstellung des Optikträgers kann ein Kostenaufwand für Arbeits- und Anlagenkosten sowie ein Zeitaufwand für die Herstellung des Optikträgers reduziert werden.

Vorzugsweise ist vorgesehen, dass mittels der im Spritzgießwerkzeug integrierten Stanzvorrichtung eine Öffnung zum Vorsehen eines Bildaufnehmers in die polymere Schaltungsfolie eingebracht wird, und die polymere Schaltungsfolie im Spritzgießwerkzeug mittels der Stanzvorrichtung und Zentrierungsstiften fixiert wird. Das Zuschneiden der von Rolle-zu-Rolle bestückten polymeren Schaltungsfolie erfolgt somit komplett in einem Spritzgießwerkzeug und auch nur auf einer Spritzgießmaschine. Die Durchführung der Folie von Rolle-zu-Rolle ermöglicht ein serientaugliches Handling und mit zusätzlichen Stiften eine exakte Positionierung der bestückten Bauteile. Da alle Prozessschritte in einem Spritzgießwerkzeug stattfinden, entstehen kaum Fehlerquellen wie beispielsweise eine Fehlausrichtung, Verschmutzungen auf der Folie, etc. und die hohen optischen Toleranzanforderungen können eingehalten werden.

Gemäß einem weiteren bevorzugten Ausführungsbeispiel ist vorgesehen, dass die zweite Seite der polymeren Schaltungsfolie mit Plasma behandelt, mit einer Laserstruktur versehen oder ein Haftgrund auf die zweite Seite der polymeren Schaltungsfolie aufgetragen wird. Somit kann eine bessere Haftung zwischen der Duroplastmasse und der Thermoplastfolie erreicht werden.

Gemäß einer weiteren bevorzugten Ausgestaltung ist vorgesehen, dass das Spritzgießwerkzeug auf eine Temperatur von 120°C bis 200°C, vorzugsweise auf eine Temperatur von 120°C bis 160°C aufgeheizt wird. Durch Verwendung eines Duroplast-Kunststoffes in Verbindung mit einer hochtemperaturbeständigen polymeren Schaltungsfolie genügt aufgrund der geringen Viskosität des duroplastischen Werkstoffes ein geringer Einspritzdruck, um das Bauteil auszuformen. Somit wird die Folie nur sehr gering belastet, so dass die vorhandenen Schaltungen nicht beschädigt werden.

Vorzugsweise ist ferner vorgesehen, dass zur Verbesserung der Haftfestigkeit zwischen der polymeren Schaltungsfolie und dem Kunststoff, welcher auf die polymere Schaltungsfolie aufgespritzt ist, ein Haftvermittler auf die zweite Seite der polymeren Schaltungsfolie aufgetragen wird. Damit kann die Haftfestigkeit auf ein erforderliches Maß verbessert werden, falls die gewählte Materialpaarung zwischen polymerer Schaltungsfolie und Duroplast-Kunststoff keine ausreichende Festigkeit besitzt.

Gemäß einem weiteren bevorzugten Ausführungsbeispiel ist vorgesehen, dass das Spritzgießwerkzeug aus einem Werkzeugstahl mit einem Chromanteil von zumindest 10 % ausgebildet ist, und wobei in dem Spritzgießwerkzeug eine Stanzvorrichtung zum Einbringen einer Öffnung in die polymere Schaltungsfolie integriert ist.

Das Zuschneiden der von Rolle-zu-Rolle bestückten polymeren Schaltungsfolie erfolgt somit komplett in einem Spritzgießwerkzeug und auch nur auf einer Spritzgießmaschine. Die Durchführung der Folie von Rolle-zu-Rolle ermöglicht ein serientaugliches Handling und mit zusätzlichen Stiften eine exakte Positionierung der bestückten Bauteile. Da alle Prozessschritte in einem Spritzgießwerkzeug stattfinden, entstehen kaum Fehlerquellen wie beispielsweise eine Fehlausrichtung, Verschmutzungen auf der Folie, etc. und die hohen optischen Toleranzanforderungen können eingehalten werden.

Gemäß einer weiteren bevorzugten Ausgestaltung ist vorgesehen, dass die Spritzgießmaschine Mittel zum Aufheizen des Spritzgießwerkzeuges auf eine Temperatur von 120°C bis 200°C, vorzugsweise auf eine Temperatur von 120°C bis 160°C aufweist. Durch Verwendung eines Duroplast-Kunststoffes in Verbindung mit einer hochtemperaturbeständigen polymeren Schaltungsfolie genügt aufgrund der geringen Viskosität des duroplastischen Werkstoffes ein geringer Einspritzdruck, um das Bauteil auszuformen. Somit wird die Folie nur sehr gering belastet, so dass die vorhandenen Schaltungen nicht beschädigt werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente und Bezeichnungen sind nicht notwendigerweise maßstabsgetreu zueinander gezeigt.

Es zeigen:
- Fig. 1: eine perspektivische Ansicht einer erfindungsgemäßen Vorrichtung zur Herstellung eines Optikträgers gemäß einer bevorzugten Ausführungsform der Erfindung;
- Fig. 2: eine Schnittansicht eines erfindungsgemäßen Spritzgießwerkzeuges einer Spritzgießmaschine zur Herstellung des Optikträgers gemäß der bevorzugten Ausführungsform der Erfindung; und
- Fig. 3: ein Ablaufdiagramm eines Verfahrens zur Herstellung des erfindungsgemäßen Optikträgers gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

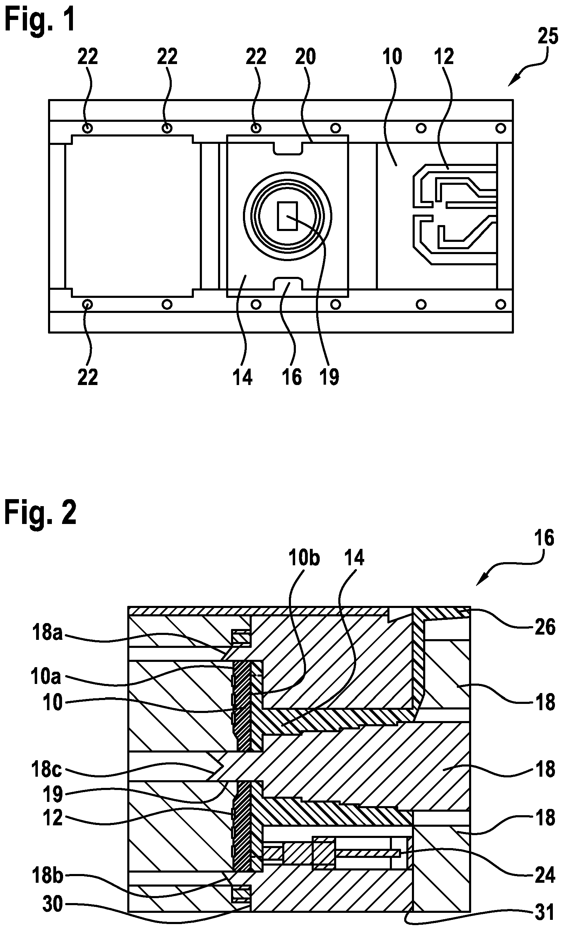

Fig. 1 zeigt eine perspektivische Ansicht einer erfindungsgemäßen Vorrichtung zur Herstellung eines Optikträgers gemäß einer bevorzugten Ausführungsform der Erfindung.

Eine Schaltungsfolie 10 wird in einer Rolle-zu-Rolle Anlage 25 durch ein Spritzgießwerkzeug in einer Spritzgießmaschine geführt. Die Schaltungsfolie wird in dem Spritzgießwerkzeug mittels einer (in Fig. 1 nicht gezeigten) Stanzvorrichtung und einer Mehrzahl von Zentrierungsstiften 22 fixiert. Auf einer ersten Seite der Schaltungsfolie sind Bahnen 12 als Leiter oder Widerstände aufgebracht. Die Schaltungsfolie 10 ist durch ein polymeres Material, vorzugsweise Polyimid ausgebildet. Alternativ kann die Schaltungsfolie 10 auch aus einem anderen geeigneten Material ausgebildet sein. Die Schaltungsfolie 10 wird in dem Spritzgießwerkzeug 16 positioniert und anschließend ein Kunststoff 14 auf die Schaltungsfolie 10 aufgespritzt. Der Kunststoff 14 ist vorzugsweise durch einen duroplastischen Kunststoff, vorzugsweise ein Bulk Moulding Compound ausgebildet. Alternativ kann der duroplastische Kunststoff auch durch ein Epoxidharz oder eine Phenolformverbindung ausgebildet sein. Durch das Aufspritzen des Kunststoffes 14 auf die Schaltungsfolie 10 wird ein Optikträger 20 ausgebildet. Eine (in Fig. 1 nicht gezeigte) Stanzvorrichtung ist in dem Spritzgießwerkzeug 16 integriert und dient zum Einbringen einer Öffnung 19 in die Schaltungsfolie 10.

Während dem Aufspritzen des Kunststoffes 14 auf die Schaltungsfolie 10 ist die Stanzvorrichtung in der Öffnung 19 angeordnet, so dass der Kunststoff 14 ebenfalls auf die Stanzvorrichtung aufgespritzt wird. Der hergestellte Optikträger 20 weist somit die Öffnung 19 im Bereich der Schaltungsfolie 10 als auch des ausgehärteten Kunststoffes 14 auf.

Fig. 2 zeigt eine Schnittansicht eines erfindungsgemäßen Spritzgießwerkzeuges in einer Spritzgießmaschine zur Herstellung des Optikträgers gemäß der bevorzugten Ausführungsform der Erfindung.

Das Spritzgießwerkzeug 16 ist in Fig. 2 im geschlossenen Zustand gezeigt. Die Schaltungsfolie 10 ist in das Spritzgießwerkzeug 16 eingelegt und derart positioniert, dass ein vorbestimmter Abschnitt der Schaltungsfolie 10 im Bereich des Spritzgießwerkzeuges 16 angeordnet ist. Auf der ersten Seite 10a der Schaltungsfolie 10 sind die Bahnen 12 als Leiter oder Widerstände aufgebracht. Auf die zweite, der ersten Seite gegenüberliegende Seite 10b der Schaltungsfolie 10 ist der Kunststoff 14 aufgespritzt.

Die Schaltungsfolie ist im vorliegenden Ausführungsbeispiel durch eine polymere Folie, insbesondere eine Polyimidfolie ausgebildet. Die Polyimidfolie ist im vorliegenden Ausführungsbeispiel bis zu einer Temperatur von 160°C wärmebeständig. Alternativ kann die Polyimidfolie auch bis zu einer Temperatur von 200°C wärmebeständig sein. Die Schaltungsfolie 10 ist in dem Spritzgießwerkzeug 16 mittels einer Stanzvorrichtung 18 und (in Fig. 2 nicht gezeigten) Zentrierungsstiften fixiert. Die Stanzvorrichtung 18 weist eine Mehrzahl von Stanzkanten auf. Die Stanzvorrichtung 18 weist in einem ersten Randbereich des Spritzgießwerkzeuges 16 eine erste Stanzkante 18a und in einem zweiten Randbereich des Spritzgießwerkzeuges 16 eine zweite Stanzkante 18b auf. Die erste Stanzkante 18a und die zweite Stanzkante 18b dienen dem Ausstanzen jeweiliger Randbereiche der Schaltungsfolie 10. Somit weisen ebenfalls entsprechende Randbereiche des hergestellten Optikträgers 20 deckungsgleiche Aussparungen auf.

Die Stanzvorrichtung 18 weist in einem mittigen Bereich des Spritzgießwerkzeuges 16 eine dritte Stanzkante 18c auf. Die dritte Stanzkante 18c ist dazu ausgebildet, die Öffnung 19 in einem mittigen Bereich der Schaltungsfolie 10 einzubringen. Der hergestellte Optikträger 20 weist somit ebenfalls in einem mittigen Bereich eine deckungsgleiche Öffnung auf.

Das Spritzgießwerkzeug 16 weist ebenfalls einen Drucksensor auf, welcher aktuelle Werte an eine Maschinensteuerung zum Regeln des Einspritzdrucks überträgt. Der Kunststoff 14 wird über einen Anguss 26 in das Spritzgießwerkzeug 16 eingespritzt.

Nach einer vorgegebenen Härtezeit wird eine Trennebene 30 des Zwei-Platten-Spritzgießwerkzeuges 16 geöffnet und der fertige Optikträger 20 aus der Kavität ausgestoßen. Durch einen Rückzieher außen am Spritzgießwerkzeug wird bei einem weiteren Öffnen eine zweite Trennebene 31 geöffnet und der Anguss 26 entfernt.

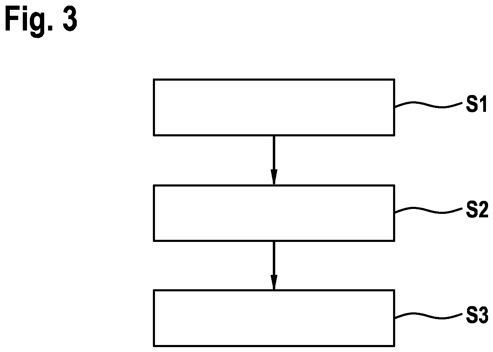

Fig. 3 zeigt ein Ablaufdiagramm eines Verfahrens zur Herstellung des erfindungsgemäßen Optikträgers gemäß der bevorzugten Ausführungsform der Erfindung.

In einem ersten Schritt S1 erfolgt ein Anordnen einer Schaltungsfolie 10 in einem Spritzgießwerkzeug 16 einer Spritzgießmaschine, wobei auf einer ersten Seite 10a der Schaltungsfolie 10 Bahnen 12 als Leiter oder Widerstände aufgebracht sind. In einem zweiten Schritt erfolgt ein Fixieren der Schaltungsfolie 10 im Spritzgießwerkzeug 16. In einem dritten Schritt erfolgt ein Einspritzen S3 eines Kunststoffes 14 in eine Kavität des Spritzgießwerkzeuges 16 zum Aufspritzen des Kunststoffes 14 auf eine zweite, der ersten Seite 10a gegenüberliegenden Seite 10b der Schaltungsfolie 10, wobei die Schaltungsfolie bis zu einer Temperatur von 160°C wärmebeständig ist. Alternativ kann die Schaltungsfolie 10 auch bis zu einer Temperatur von 200°C wärmebeständig sein.

Zur besseren Haftung zwischen dem Kunststoff 14 und der Schaltungsfolie 10 kann die zweite Seite 10b der Schaltungsfolie 10 unmittelbar vor dem Umspritzen mit Plasma vorbehandelt werden. Alternativ kann die Schaltungsfolie auch mit einer Laserstruktur versehen werden oder ein Haftgrund auf die zweite Seite 10b der Schaltungsfolie 10 aufgetragen werden. Der Kunststoff 14 ist im vorliegenden Ausführungsbeispiel durch einen duroplastischen Kunststoff, vorzugsweise durch ein Bulk Moulding Compound ausgebildet. Alternativ kann der Kunststoff auch durch ein Epoxidharz oder eine Phenolformverbindung ausgebildet sein. Die Vernetzung des duroplastischen Kunststoffes 14 beginnt mit dem Einspritzvorgang in das aufgeheizte Spritzgießwerkzeug 16. Der Forminnendruck erreicht einen maximalen Wert von 40 bar. Somit wird die auf die Schaltungsfolie 10 aufgebrachte Schaltung nicht beschädigt.

Bei dem Einspritzen kommt die reaktive Duroplastmasse mit einer Oberfläche der Schaltungsfolie 10 in Kontakt und verbindet sich physikalisch und chemisch mit dieser, so dass eine beständige Verbindung entsteht. Durch eine positive Schwindung des duroplastischen Kunststoffes 14 wird der Optikträger 20 optimal ausgeformt.

Das Zuschneiden der von Rolle-zu-Rolle bestückten Schaltungsfolie 10 und das Aufspritzen bzw. Hinterspritzen der Schaltungsfolie 10 erfolgt komplett in einem Spritzgießwerkzeug 16 und auch nur einer Spritzgießmaschine. Die Durchführung der Schaltungsfolie 10 von Rolle-zu-Rolle ermöglicht ein serientaugliches Handling und durch Verwendung der Zentrierungsstifte 22 eine exakte Positionierung der bestückten Schaltungsfolie 10 im Spritzgießwerkzeug 16.

Durch die Rollenbewegung wird die Schaltungsfolie 10 vor bzw. nach dem Einspritzvorgang um eine Position versetzt und beide Trennebenen des Spritzgießwerkzeugs 16 geschlossen. Alternativ kann eine fertig konfektionierte Folie mit einem Folienhandling in das geöffnete Spritzgießwerkzeug eingelegt werden. Eine Ausrichtung der Schaltungsfolie 10 erfolgt über die Zentrierstifte 22 im Spritzgießwerkzeug 16. In einem nachfolgenden Prozessschritt wird die Optik im Optikträger 20 platziert und ein Bildaufnehmer auf die Schaltungsfolie 10 geklebt.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann der Optikträger 20 auch für ein anderes Kamerasystem im Rahmen eines Umfelderfassungssystems von Schienen- oder Luftfahrzeugen oder im Bereich von Gebäuden verwendet werden.

## Patentansprüche

1. Optikträger für ein Kamerasystem eines Umfelderfassungssystems eines Kraftfahrzeuges **gekennzeichnet durch** eine polymere Schaltungsfolie (10), wobei auf einer ersten Seite (10a) der polymeren Schaltungsfolie (10) Bahnen (12) als Leiter oder Widerstände aufgebracht sind und auf einer zweiten, der ersten Seite gegenüberliegenden Seite (10b) der polymeren Schaltungsfolie (10) ein duroplastischer Kunststoff (14) zur Ausbildung des Optikträgers aufgespritzt ist.

2. Optikträger nach Anspruch 1, **dadurch gekennzeichnet, dass** die polymere Schaltungsfolie (10) durch eine Polyimidfolie ausgebildet ist, welche bis zu einer Temperatur von 200°C wärmebeständig ist.

3. Optikträger nach Anspruch 1 oder 2, **dadurch gekennzeichnet, dass** der duroplastische Kunststoff (14) durch ein Epoxidharz, eine Phenolformverbindung oder ein Bulk Moulding Compound ausgebildet ist.

4. Optikträger nach einem der vorhergehenden Ansprüche, **dadurch gekennzeichnet, dass** die zweite Seite (10b) der polymeren Schaltungsfolie (10) mit Plasma behandelt, mit einer Laserstruktur versehen oder ein Haftgrund auf die zweite Seite (10b) der polymeren Schaltungsfolie (10) aufgetragen ist.

5. Optikträger nach einem der vorhergehenden Ansprüche, **dadurch gekennzeichnet, dass** auf der zweiten Seite (10b) der polymeren Schaltungsfolie (10) ein Haftvermittler zur Verbesserung der Haftfestigkeit zwischen der polymeren Schaltungsfolie (10) und dem Kunststoff (14), welcher auf die polymere Schaltungsfolie (10) aufgespritzt ist, aufgetragen ist.

6. Verfahren zur Herstellung eines Optikträgers nach Anspruch 1, mit den Schritten:
Anordnen (S1) einer polymeren Schaltungsfolie (10) in einem Spritzgießwerkzeug (16) einer Spritzgießmaschine, wobei auf einer ersten Seite (10a) der polymeren Schaltungsfolie (10) Bahnen (12) als Leiter oder Widerstände aufgebracht sind;
Fixieren (S2) der polymeren Schaltungsfolie (10) im Spritzgießwerkzeug (16); und
Einspritzen (S3) eines duroplastischen Kunststoffes (14) in eine Kavität des Spritzgießwerkzeuges (16) zum Aufspritzen des duroplastischen Kunststoffes (14) auf eine zweite, der ersten Seite (10a) gegenüberliegenden Seite (10b) der polymeren Schaltungsfolie (10) zur Ausbildung des Optikträgers.

7. Verfahren nach Anspruch 6, **dadurch gekennzeichnet, dass** die polymere Schaltungsfolie (10) von Rolle-zu-Rolle durch das Spritzgießwerkzeug (16) geführt und mittels einer im Spritzgießwerkzeug (16) integrierten Stanzvorrichtung (18) zugeschnitten wird.

8. Verfahren nach Anspruch 7, **dadurch gekennzeichnet, dass** mittels der im Spritzgießwerkzeug (16) integrierten Stanzvorrichtung (18) eine Öffnung (19) zum Vorsehen eines Bildaufnehmers in die polymere Schaltungsfolie (10) eingebracht wird, und die polymere Schaltungsfolie (10) im Spritzgießwerkzeug (16) mittels der Stanzvorrichtung (18) und Zentrierungsstiften (22) fixiert wird.

9. Verfahren nach einem der Ansprüche 6 bis 8, **dadurch gekennzeichnet, dass** die zweite Seite (10b) der polymeren Schaltungsfolie (10) mit Plasma behandelt, mit einer Laserstruktur versehen oder ein Haftgrund auf die zweite Seite (10b) der polymeren Schaltungsfolie (10) aufgetragen wird.

10. Verfahren nach einem der Ansprüche 6 bis 9, **dadurch gekennzeichnet, dass** das Spritzgießwerkzeug (16) auf eine Temperatur von 120°C bis 200°C, vorzugsweise auf eine Temperatur von 120°C bis 160°C aufgeheizt wird.

11. Verfahren nach einem der Ansprüche 6 bis 10, **dadurch gekennzeichnet, dass** zur Verbesserung der Haftfestigkeit zwischen der polymeren Schaltungsfolie (10) und dem Kunststoff (14), welcher auf die polymere Schaltungsfolie (10) aufgespritzt ist, ein Haftvermittler auf die zweite Seite (10b) der polymeren Schaltungsfolie (10) aufgetragen wird.

12. Kamerasystem für ein Umfelderfassungssystem eines Kraftfahrzeuges mit:
einem Optikträger (20) nach einem der Ansprüche 1 bis 5;
einem im Bereich einer Öffnung (19) der polymeren Schaltungsfolie (10) vorgesehenen Bildaufnehmer; und
einer in dem Optikträger (20) angeordneten Optik, welche einfallendes Licht auf den Bildaufnehmer führt.

## Claims

1. Optics carrier for a camera system of an environment-detection system of a motor vehicle **characterized by** a polymeric circuit film (10), wherein tracks (12) are applied as conductors or resistors on a first side (10a) of the polymeric circuit film (10) and a thermosetting plastic (14) is injection-moulded on a second side (10b), which is opposite to the first side, of the polymeric circuit film (10) for forming the optics carrier.

2. Optics carrier according to Claim 1, **characterized in that** the polymeric circuit film (10) is formed by means of a polyimide film which is thermally stable up to a temperature of 200°C.

3. Optics carrier according to Claim 1 or 2, **characterized in that** the thermosetting plastic (14) is formed by means of an epoxy resin, a phenolic moulding compound or a bulk moulding compound.

4. Optics carrier according to any of the preceding claims, **characterized in that** the second side (10b) of the polymeric circuit film (10) is treated with plasma, is provided with a laser structure or an adhesion primer is applied to the second side (10b) of the polymeric circuit film (10).

5. Optics carrier according to any of the preceding claims, **characterized in that** an adhesion promoter is applied to the second side (10b) of the polymeric circuit film (10) for improving the adhesive strength between the polymeric circuit film (10) and the plastic (14) which is injection-moulded onto the polymeric circuit film (10).

6. Method for producing an optics carrier according to Claim 1, having the steps:
arranging (S1) a polymeric circuit film (10) in an injection mould (16) of an injection moulding machine, wherein tracks (12) are applied as conductors or resistors on a first side (10a) of the polymeric circuit film (10);
fixing (S2) the polymeric circuit film (10) in the injection mould (16); and
injecting (S3) a thermosetting plastic (14) into a cavity of the injection mould (16) for injection-moulding the thermosetting plastic (14) onto a second side (10b), which is opposite to the first side (10a), of the polymeric circuit film (10) for forming the optics carrier.

7. Method according to Claim 6, **characterized in that** the polymeric circuit film (10) is guided through the injection mould (16) from roll-to-roll and is cut to size by means of a punching device (18) which is integrated in the injection mould (16).

8. Method according to Claim 7, **characterized in that** an opening (19) for providing an image sensor is introduced into the polymeric circuit film (10) by means of the punching device (18) which is integrated in the injection mould (16) and the polymeric circuit film (10) is fixed in the injection mould (16) by means of the punching device (18) and centering pins (22).

9. Method according to any of Claims 6 to 8, **characterized in that** the second side (10b) of the polymeric circuit film (10) is treated with plasma, is provided with a laser structure or an adhesion primer is applied to the second side (10b) of the polymeric circuit film (10) .

10. Method according to any of Claims 6 to 9, **characterized in that** the injection mould (16) is heated to a temperature of 120°C to 200°C, preferably to a temperature of 120°C to 160°C.

11. Method according to any of Claims 6 to 10, **characterized in that** for improving the adhesive strength between the polymeric circuit film (10) and the plastic (14) which is injection-moulded onto the polymeric circuit film (10), an adhesion promoter is applied to the second side (10b) of the polymeric circuit film (10).

12. Camera system for an environment-detection system of a motor vehicle having:
an optics carrier (20) according to any of Claims 1 to 5;
an image sensor provided in the region of an opening (19) of the polymeric circuit film (10); and
optics, arranged in the optics carrier (20), which guide incident light onto the image sensor.

## Revendications

1. Porte-optique pour un système de caméra d'un système d'acquisition d'environnement d'un véhicule automobile, **caractérisé par** un circuit imprimé souple en polymère (10), des pistes (12) étant appliquées sur une première face (10a) du circuit imprimé souple en polymère (10) sous la forme de conducteurs ou de résistances et une matière plastique thermodurcissable (14) destinée à former le porte-optique étant pulvérisée sur une deuxième face (10b), opposée à la première face du circuit imprimé souple en polymère (10).

2. Porte-optique selon la revendication 1, **caractérisé en ce que** le circuit imprimé souple en polymère (10) est formé par un film polyamide qui est résistant à la chaleur jusqu'à une température de 200 °C.

3. Porte-optique selon la revendication 1 ou 2, **caractérisé en ce que** la matière plastique thermodurcissable (14) est formée par une résine époxy, une combinaison de moulage phénolique ou un préimprégné en vrac.

4. Porte-optique selon l'une des revendications précédentes, **caractérisé en ce que** la deuxième face (10b) du circuit imprimé souple en polymère (10) est traitée au plasma, munie d'une structure au laser ou alors un primaire d'adhérence est appliqué sur la deuxième face (10b) du circuit imprimé souple en polymère (10).

5. Porte-optique selon l'une des revendications précédentes, **caractérisé en ce que** sur la deuxième face (10b) du circuit imprimé souple en polymère (10) est appliqué un agent adhésif destiné à améliorer la résistance de l'adhérence entre le circuit imprimé souple en polymère (10) et la matière plastique (14) qui est pulvérisée sur le circuit imprimé souple en polymère (10).

6. Procédé de fabrication d'un porte-optique selon la revendication 1, comprenant les étapes suivantes :
disposition (S1) d'un circuit imprimé souple en polymère (10) dans un outil de moulage par injection (16) d'une machine de moulage par injection, des pistes (12) étant appliquées sur une première face (10a) du circuit imprimé souple en polymère (10) sous la forme de conducteurs ou de résistances ;
calage (S2) du circuit imprimé souple en polymère (10) dans l'outil de moulage par injection (16) ; et
injection (S3) d'une matière plastique thermodurcissable (14) dans une cavité de l'outil de moulage par injection (16) en vue de pulvériser la matière plastique thermodurcissable (14) sur une deuxième face (10b), opposée à la première face (10a) du circuit imprimé souple en polymère (10) en vue de former le porte-optique.

7. Procédé selon la revendication 6, **caractérisé en ce que** le circuit imprimé souple en polymère (10) est guidé de bobine à bobine à travers l'outil de moulage par injection (16) et découpé au moyen d'un dispositif de découpage (18) intégré dans l'outil de moulage par injection (16).

8. Procédé selon la revendication 7, **caractérisé en ce qu'**une ouverture (19) destinée à prévoir un enregistreur d'images est pratiquée dans le circuit imprimé souple en polymère (10) au moyen du dispositif de découpage (18) intégré dans l'outil de moulage par injection (16), et le circuit imprimé souple en polymère (10) est calé dans l'outil de moulage par injection (16) au moyen du dispositif de découpage (18) et de broches de centrage (22) .

9. Procédé selon l'une des revendications 6 à 8, **caractérisé en ce que** la deuxième face (10b) du circuit imprimé souple en polymère (10) est traitée au plasma, munie d'une structure au laser ou alors un primaire d'adhérence est appliqué sur la deuxième face (10b) du circuit imprimé souple en polymère (10).

10. Procédé selon l'une des revendications 6 à 9, **caractérisé en ce que** l'outil de moulage par injection (16) est chauffé à une température de 120 °C à 200 °C, de préférence à une température de 120 °C à 160 °C.

11. Procédé selon l'une des revendications 6 à 10, **caractérisé en ce qu'**en vue d'améliorer la résistance de l'adhérence entre le circuit imprimé souple en polymère (10) et la matière plastique (14) qui est pulvérisée sur le circuit imprimé souple en polymère (10), un agent adhésif est appliqué sur la deuxième face (10b) du circuit imprimé souple en polymère (10).

12. Système de caméra pour un système d'acquisition d'environnement d'un véhicule automobile comprenant :
un porte-optique (20) selon l'une des revendications 1 à 5 ;
un enregistreur d'images prévu dans une zone d'une ouverture (19) du circuit imprimé souple en polymère (10) ; et
une optique disposée dans le porte-optique (20), laquelle guide la lumière incidente sur l'enregistreur d'images.
